# EUROPEAN PATENT APPLICATION

(11) **EP 0 912 048 A2**
(43) Date of publication of application: **28.04.1999**
(21) Application number: 98307140.8
(22) Date of filing: 04.09.1998
(51) Int. Cl.: H04N 5/32

(54) **Solid state imagers**

(30) Priority: 21.10.1997 GB 9722106
(71) Applicant: Eev Limited, Chelmsford, Essex CM9 2QU (GB)
(72) Inventor: Allen, Brian Philip, Nr. Halstead, Essex CO9 4DA (GB)
(74) Representative: Cockayne, Gillian

(57) **Abstract**

In an intra oral dental X-ray system, a solid state imager 1 includes an array of CMOS pixel circuits 6 and has a fibre optic taper 5 located between the array 6 and scintillator material 4.

During use, X-ray radiation transmitted via an object 2 to be imaged from a source 3 and is incident on the scintillator material 4 where it is converted into light. The light is transmitted via the taper 5 to the array 6 where an image is generated which is representative of the radiation transmitted through the object 2. The fibre optic taper 5 provides good image quality and maintains resolution.

## Description

This invention relates to solid state imagers and more particularly to imagers using CMOS pixel circuits for detection of high energy radiation.

Intra-oral digital dental X-ray sensors have now been available for some years as a replacement for the previously used X-ray sensitive film. This type of solid state imager uses a CCD detector array to produce a signal which is representative of radiation incident on the array. CCD based sensors give good results and use well established technology. However they also have some drawbacks. Incident X-rays which are not converted into light at an overlying scintillator coating may penetrate into the CCD structure and even a relatively small dose of radiation delivered into these regions can have a significant effect on the performance of a CCD imager and on its lifetime. CCD based imagers are also considered complex to manufacture and therefore relatively expensive.

Image sensors using CMOS technology are now being seen as a realistic alternative to CCD devices. CMOS sensors are less susceptible to radiation damage than CCD sensors making them an attractive choice for X-ray imaging and relatively straightforward to manufacture.

The present invention seeks to provide a solid state imager which is particularly suitable for intra-oral dental use, although it may be used with advantage for other applications.

According to the invention, there is provided a solid state imager for detecting high energy radiation, comprising: an array of CMOS pixel circuits arranged to produce an output signal representative of light incident thereon; scintillator means for converting incident high energy radiation into light to which the array is sensitive; and fibre optic means located between the scintillator means and the array via which light from the scintillator means is transmitted.

One of the advantages of using CMOS technology in place of CCD sensor arrays is that protection afforded against damaging X-ray radiation, such as may be provided by a fibre optic light guide in front of a CCD sensor array, is no longer required. CMOS technology is generally regarded as being "radiation hard" and this is one of its attractions for use in detecting high energy radiation but even this may vary between actual CMOS fabrication lines. Thus, a solid state imager in accordance with the present invention would appear to be directly contrary to the accepted manner in which CMOS sensor technology is employed. However, the present inventor has discovered that by employing the invention an improved solid state imager may result. Although the use of the fibre optic means may somewhat increase the complexity and bulk of the solid state imager, a fibre optic guide located between the scintillator and the array can give an improvement in image quality and resolution compared to that available if the fibre optic means were not to be used. This may also enable an acceptable image to be generated with a smaller dose of X-rays which is also highly desirable.

The fibre optic means is preferably a fibre optic taper having a larger cross sectional area at the scintillator means and a smaller area at the array but its advantages in enhancing image quality may still be obtained by employing a non-tapered fibre optic member between the two. The fibre optic means is advantageously substantially 2mm or longer in length. In a preferred embodiment of the invention, scintillator material is laid down on a surface of the fibre optic member. The scintillator means may be any suitable material which efficiently converts incident high energy radiation, such as X-rays, into light, whether in the visible spectrum or outside, which is detectable by the array.

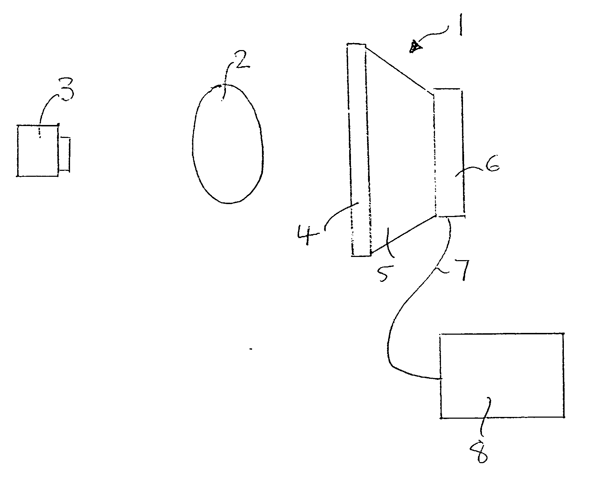

One way in which the invention may be performed is now described by way of example with reference to the accompanying drawing, in which the sole figure schematically illustrates a solid state imager in accordance with the invention employed in an intra oral dental imaging system.

With reference to the Figure, a solid state imager 1 is located behind an object 2 to be imaged, such as a patient's jaw, and is arranged to receive radiation from an X-ray source 3 after transmission through the object 2. The solid state imager 1 includes a layer of scintillator material 4 which may be provided by any suitable phosphor material, for example. X-ray radiation incident on the scintillator material 4 is converted into light which is transmitted via a fused fibre optic taper 5 to an array 6 of CMOS pixel circuits. Photodetectors included in the pixel circuits are addressed by CMOS circuitry to produce signals representative of the intensity of incident light across the array. The signals are read out via a lead 7 and external processor 8 to provided a visual image of the object 2 being examined. In other applications, the solid state imager 1 may be independent of any connections such as that shown at 7. Information is then stored at the pixel circuit array 6 and read out subsequently at a separate base station.

The fibre optic taper 5 has a larger transverse area at its face 5a adjacent the scintillator material which is laid down on it and smaller transverse face area 5b adjacent to the pixel circuit array 6. The fibre optic taper maintains resolution of the image transmitted through it improving final image quality. This may also permit a low dose of X-ray radiation to be used to produce an acceptable output. In this embodiment, the fibre optic taper 5 is approximately 3mm in length from the scintillator material 4 to the array 6 as shown at d and is tapered.

In other arrangements, the fibre optic member interposed between the scintillator material and the detector array may be straight sided which still provides good image quality.

## Claims

1. A solid state imager for detecting high energy radiation comprising: an array (6) of CMOS pixel circuits arranged to produce an output representative of light incident thereon; scintillator means (4) for converting incident high energy radiation into light to which the array is sensitive; and fibre optic means (5) located between the scintillator means (4) and the array (6) via which light from the scintillator means is transmitted.

2. An imager as claimed in claim 1 wherein the fibre optic means (5) is a fibre optic taper having a larger transverse area at the scintillator means (4) than at the array (6).

3. An imager as claimed in claim 1 or 2 wherein scintillator means (4) comprises scintillator material laid down on a surface of the fibre optic means (5).

4. An imager as claimed in claim 1, 2 or 3 wherein the fibre optic means (5) has a length in a direction between the scintillator means (4) and the array (6) of approximately 2mm or longer.

5. An intra oral dental system comprising a solid state imager as claimed in any proceeding claim.

6. A system as claimed in claim 5 and including a source (3) of high energy radiation.
